# EUROPÄISCHE PATENTANMELDUNG

(11) **EP 2 933 900 A1**
(43) Veröffentlichungstag der Anmeldung: **21.10.2015**
(21) Anmeldenummer: 14164908.7
(22) Anmeldetag: 16.04.2014
(51) Int. Cl.: H02K 1/02, H01F 1/26, H01F 1/28, H02K 15/02

(54) **Stator und/oder Rotor einer dynamoelektrischen Maschine insbesondere für Erdgaskompressoren**

(71) Anmelder: Siemens Aktiengesellschaft, 80333 München (DE)
(72) Erfinder: Klaussner, Bernhard, 90408 Nürnberg (DE)

(57) **Zusammenfassung**

Die Erfindung betrifft eine dynamoelektrische Maschine (1) mit einem Stator (2) und einem Rotor (4), die jeweils ein weichmagnetisches Material zur Führung des Magnetfeldes aufweisen, wobei ein Kompositmaterial aus chemikalienbeständigem Kunststoff als ein Basismaterial (11) vorgesehen ist, dass weichmagnetische Füllstoffe (9) aufweist, die durch Polymere umhüllt sind.

## Beschreibung

Die Erfindung betrifft einen Stator und/oder Rotor einer dynamoelektrischen Maschine, insbesondere zum Antrieb für Erdgaskompressoren bei denen die dynamoelektrischen Maschine und damit die magnetfeldführenden Komponenten, wie Blechpakete des Stators und/oder Rotors einer chemisch aggressiven Umgebung ausgesetzt sind.

Dynamoelektrische Maschinen benötigen sowohl im Rotor als auch im Stator weichmagnetisches Material zur verlustarmen Führung des Magnetfeldes. Für diese Funktion werden im Allgemeinen metallische, insbesondere kernorientierte Bleche, gestapelt. Diese Bleche sind für eine Minimierung von Verlusten, insbesondere Wirbelstromverlusten erforderlich. Für extreme Umgebungsbedingungen z.B. für Kompressoren zur Förderung von Erdgas in der Erdgasindustrie müssen diese Bleche u.a. der Statoren dieser als Antriebe eingesetzten dynamoelektrischen Maschine durch zusätzliche Maßnahmen vor Korrosion geschützt werden.

Dies geschieht beispielsweise durch Imprägnierung der Wicklung des Stators mittels Tränkmittel, was gleichzeitig einen Korrosionsschutz des Blechpaketes bewirkt. Zusätzlich kann das Blechpaket bzw. die einzelnen Bleche auch durch Korrosionsschutzschlacke separat beschichtet werden.

Nachteilig dabei ist, dass durch mechanische Beschädigung durch Stoß oder Vibration der Korrosionsschutz der Bleche eines derartigen Blechpakets von Stator und/oder Rotor beschädigt oder zerstört werden kann. Dadurch entstehen an und zwischen den Blechen Bedingungen für Spaltkorrosion. Diese Bedingungen, wie sie bei der Gasförderung aufgrund des sehr niedrigen ph-Wert der Umgebung und des zu fördernden Mediums vorliegen, führt zu einer raschen Zersetzung des gesamten Blechpakets des Stators und/oder Rotors. Eine derartige Zersetzung des Blechpakets, das für die Führung des Magnetflusses der dynamoelektrischen Maschine unerlässlich ist, führt zur einer Funktionsbeeinträchtigung oder Funktionsunfähigkeit der dynamoelektrischen Maschine und damit der gesamten Erdgasförderanlage.

Ausgehend davon liegt der Erfindung die Aufgabe zugrunde, einen Stator und/oder Rotor für eine dynamoelektrische Maschine, insbesondere für aggressive Umgebungsbedingungen zu schaffen. Dabei sollen insbesondere die magnetfeldführenden Komponenten des Stators und/oder des Rotors den geschilderten Umgebungsbedingungen standhalten und einen ordnungsgemäßen Betrieb einer Erdgasförderanlage gewährleisten.

Die Lösung der gestellten Aufgabe gelingt durch einen Stator und/oder Rotor einer dynamoelektrischen Maschine, die jeweils weichmagnetisches Material zur Führung eines Magnetfeldes aufweisen, wobei Stator und/oder Rotor ein Basismaterial aufweisen, das ein Kompositmaterial aus chemikalienbeständigem Kunststoff mit weichmagnetischen Füllstoffe enthält.

Anstelle der herkömmlichen Blechpakete für Stator und/oder Rotor aus weichmagnetischen gestapelten Blechen wird nunmehr ein Kompositmaterial mit einem chemikalienbeständigen Kunststoff mit weichmagnetischen Füllstoffen als "Blechpaket" also als magnetfeldführende Komponente verwendet. Diese Füllstoffe sind vorzugsweise metallische Partikel oder andere magnetisierbare Stoffe. Durch Verwendung von ferritischen Oxiden als Füllstoff wird das Korrosionsrisiko zusätzlich minimiert.

Als magnetische Füllstoffe, die in dem chemikalienbeständigem Kunststoff zugegeben werden, eignen sich vor allem Ferrite und Eisenpulver. Dabei ist ein Volumenprozentanteil der weichmagnetischen Füllmaterialen von > 80 Vol.% bei 50-60 Massen%-Anteil anzustreben. Die Partikelgröße der weichmagnetischen Füllmaterialen ist dabei zwischen 0,5 und 5 mm, vorzugsweise 2-3 mm. Damit lässt sich das erhaltene Material mit den gängigen Verfahren wie Spritzguss- oder Extrusionsverfahren weiterverarbeiten, indem die für Stator und/oder Rotor erforderlichen Teile hergestellt werden.

Die weichmagnetischen Füllstoffe sind also durch den chemikalienbeständigen Kunststoff umgeben. Somit ist jeder Partikel des Kompositmaterials korrosionsschützt. Ein Korrosionsangriff bleibt auch nach Beschädigung der Umhüllung lokal auf das frei werdende Partikel begrenzt.

Der Korrosionsschutz kann zusätzlich durch Verwendung von weichmagnetischen Oxiden, Sulfiden oder Sulfaten als Partikel gesteigert werden.

Die dynamoelektrischen Maschinen weisen somit durch formgebende Verfahren hergestellte magnetführende Teile, insbesondere Statoren und Rotoren auf, deren magnetfeldführende Teile aus den oben genannten Kompositmaterialien hergestellt werden.

Darüber hinaus ist die Verwendung von dünneren oder dickeren Schicht bzw. Folien vorstellbar, die mit üblichen Verfahren, beispielsweise massiven Endscheiben zu einem Paket gestapelt und durch axial verlaufende Bolzen kompaktiert werden. Damit werden Statoren und/oder Rotoren erhalten, die sich außer zur Magnetfeldführung auch zum Betrieb in chemisch aggressiver Umgebung eignen, da keine Spaltkorrosion einsetzen kann.

Die hergestellten Schichten bzw. Folien können schichtweise auch verklebt werden, um einen Stator und/oder Rotor zu erhalten. Dies gelingt beispielsweise durch ein an sich bekanntes hot-sealing-Verfahren.

Die Lösung der gestellten Aufgabe gelingt auch durch einen Stator und/oder Rotor einer dynamoelektrischen Maschine, die jeweils weichmagnetisches Material zur Führung des Magnetfeldes aufweisen, wobei Stator und/oder Rotor ein Basismaterial, mit weichmagnetischen Füllstoffen aufweisen, die jeweils durch ein Polymer umhüllt sind.

Anstelle der herkömmlichen Blechpakete für Stator und/oder Rotor aus weichmagnetischen Blechschichten wird nunmehr ein Basismaterial, mit weichmagnetischen Füllstoffen vorgesehen, die jeweils durch ein Polymer umhüllt sind. Damit ist jeder Füllstoff eigens gegen Korrosion geschützt. Ein Zusammenfügen der jeweils von einem Polymer umhüllten Füllstoffe bzw. Partikel ergibt das "Blechpaket" bzw. die magnetfeldführende Komponente des Stators und/oder Rotors.

Diese Füllstoffe bzw. Partikel sind vorzugsweise metallische Partikel oder andere magnetisierbare Stoffe. Durch Verwendung von ferritischen Oxiden als Füllstoff wird das Korrosionsrisiko zusätzlich minimiert. Ein Verletzen einer Umhüllung eines Partikels führt somit im "worst-case" lediglich zur Korrosion dieses Partikels. Die Magnetfeldführung im Stator und/oder Rotor der dynamoelektrischen Maschine ist dabei vernachlässigbar beeinträchtigt.

Als magnetische Füllstoffe bzw. Partikel eignen sich vor allem Ferrite und Eisenpulver, dabei ist ein Volumenprozentanteil der weichmagnetischen Füllmaterialen von > 80 Vol.% bei 50-60 Massen%-Anteil anzustreben. Die Partikelgröße der weichmagnetischen Füllmaterialen ist dabei ebenfalls zwischen 0,5 und 5 mm, vorzugsweise 2-3 mm, um mit den gängigen Verfahren wie Spritzguss- oder Extrusionsverfahren verarbeitet werden zu können.

Durch Einkapselung der weichmagnetischen Füllstoffe, also der Partikel in korrosionsschützende Polymere bleibt ein Korrosionsangriff auch nach Beschädigung der Kapselung lokal auf das frei werdende Partikel begrenzt.

Der Korrosionsschutz kann zusätzlich durch Verwendung von weichmagnetischen Oxiden, Sulfiden oder Sulfaten als Partikel weiter gesteigert werden.

Die dynamoelektrischen Maschinen weisen somit durch formgebende Verfahren hergestellte magnetführende Teile, insbesondere Statoren und/oder Rotoren auf, deren magnetfeldführende Teile aus den oben genannten Kompositmaterialien hergestellt werden.

Darüber hinaus ist die Verwendung von dünneren oder dickeren Folien vorstellbar, die mit üblichen Verfahren, beispielsweise massiven Endscheiben zu einem Paket gestapelt und durch axial verlaufende Bolzen kompaktiert werden.

Bestimmte Basispolymere, also einzelne umhüllte Partikel werden verklebt und so bilden so größere Einheiten. Diese Einheiten sind bereits als einteilige zusammengefügte/geklebte Statoren und/oder Rotoren ausgebildet.

Diese Einheiten können aber auch als Subeinheiten, wie z.B. Schichten oder Folien ausgebildet sein, die dann schichtweise verklebt werden, wie dies beispielsweise durch ein hot-sealing-Verfahren bekannt ist. Dadurch können die magnetfeldführenden Teile der Statoren und/oder Rotoren gebildet werden.

Die Lösung der gestellten Aufgabe gelingt auch durch ein Verfahren zur Herstellung eines Stators und/oder eines Rotors einer dynamoelektrischen Maschine durch folgende Schritte:
- Dotierung eines chemikalienbeständigen Kunststoffs mit weichmagnetischen Füllstoffen um ein Basismaterial zu erhalten,
- Formen des Basismaterials mittels eines Extrusions- oder Spitzgießverfahrens.

Anstelle der herkömmlichen Blechpakete für Stator und/oder Rotor aus weichmagnetischen Blechschichten wird nunmehr ein Kompositmaterial mit einem chemikalienbeständigen Kunststoff mit weichmagnetischen Füllstoffen als "Blechpaket" bzw. Basismaterial verwendet. Diese weichmagnetischen Füllstoffe sind vorzugsweise metallische Partikel oder andere magnetisierbare Stoffe. Durch Verwendung von ferritischen Oxiden als Füllstoff wird das Korrosionsrisiko zusätzlich minimiert.

Als magnetische Füllstoffe für dieses Verfahren eignen sich vor allem Ferrite und Eisenpulver. Dabei ist ein Volumenprozentanteil der weichmagnetischen Füllmaterialen von > 80 Vol.% bei 50-60 Massen%-Anteil anzustreben. Die Partikelgröße der weichmagnetischen Füllmaterialen ist dabei zwischen 0,5 und 5 mm, vorzugsweise 2-3 mm, um mit den gängigen Verfahren wie Spritzguss- oder Extrusionsverfahren verarbeitet zu werden.

Durch das Herstellverfahren wird eine nahezu vollständige Einkapselung aller weichmagnetischen Füllstoffe erreicht. Durch aneinander liegen zweier Partikel ist es aber nicht gewährleistet, dass jeder Partikel eine Mindestschichtdicke Kunststoff aufweist. Durch eine Verletzung dieser Umhüllung wäre dann nicht nur ein Partikel betroffen - dies schränkt jedoch die Magnetfeldführung nicht ein.

Grundsätzlich weist also der Partikel einen korrosionsschützenden Kunststoff, vorzugsweise Polymer mit einer vorgegebenen Mindestschichtdicke auf. Damit bleibt ein Korrosionsangriff auch nach Beschädigung der Umhüllung bzw. Kapselung des Partikels lokal auf das frei werdende Partikel begrenzt.

Der Korrosionsschutz kann zusätzlich durch Verwendung von weichmagnetischen Oxiden, Sulfiden oder Sulfaten als Partikel in dem chemikalienbeständigen Kunststoff weiter gesteigert werden.

Statoren und/oder Rotoren von dynamoelektrischen Maschinen weisen somit durch formgebende Verfahren hergestellte magnetführende Teile, aus dem oben genannten Basismaterial auf.

Darüber hinaus ist die Verwendung von dünneren oder dickeren Folien vorstellbar, die mit üblichen Verfahren, beispielsweise massiven Endscheiben zu einem Paket gestapelt und durch axial verlaufende Bolzen kompaktiert werden. Somit werden die magnetfeldführenden Teile der Statoren und/oder Rotoren hergestellt, die anschließend mit Wicklungen, Permanentmagneten oder anderen magnetfeldbildenden Elementen versehen werden.

Bestimmte Basispolymere können schichtweise auch verklebt werden, wie dies beispielsweise durch ein hot-sealing-Verfahren bekannt ist.

Die Lösung der gestellten Aufgabe gelingt durch ein Verfahren zur Herstellung eines Stators und/oder eines Rotors einer dynamoelektrischen Maschine durch folgende Schritte:
- Umhüllen von weichmagnetischen Füllstoffen mit einem Polymer, mit anschließendem Verkleben der umhüllten Füllstoffe um ein Basismaterial zu erhalten,
- Formen des Basismaterials.

Einzelne Partikel bzw. Füllstoffe werden mit einer Polymerschicht überzogen. Die Schichtdicke kann dabei vorgegeben werden, so dass jedes Partikel eine ausreichende Umhüllung aufweist. Diese Füllstoffe sind vorzugsweise metallische Partikel oder andere magnetisierbare Stoffe. Durch Verwendung von ferritischen Oxiden als Füllstoff wird das Korrosionsrisiko zusätzlich minimiert.

Als magnetische Füllstoffe, die in der chemikalienbeständigen Umhüllung eingebettet sind, eignen sich vor allem Ferrite und Eisenpulver. Dabei ist ein Volumenprozentanteil der weichmagnetischen Füllmaterialen von > 80 Vol.% bei 50-60 Massen%-Anteil bei dem herzustellenden Element oder Subelement, wie eine Folie bzw. Schicht anzustreben. Die Partikelgröße der weichmagnetischen Füllmaterialen ist dabei zwischen 0,5 und 5 mm, vorzugsweise 2-3 mm. Damit lässt sich das erhaltene Material - also mit Umhüllung versehene Partikel - mit den gängigen Verfahren wie Spritzguss- oder Extrusionsverfahren weiterverarbeiten, indem die für Stator und/oder Rotor erforderlichen Teile hergestellt werden.

Die weichmagnetischen Füllstoffe sind also alle durch einen chemikalienbeständigen Kunststoff umgeben. Somit ist jeder Partikel korrosionsschützt. Ein Korrosionsangriff bleibt auch nach Beschädigung der Umhüllung lokal auf das frei werdende Partikel begrenzt.

Der Korrosionsschutz kann zusätzlich durch Verwendung von weichmagnetischen Oxiden, Sulfiden oder Sulfaten als Partikel gesteigert werden.

Statoren und/oder Rotoren von dynamoelektrischen Maschinen weisen somit durch formgebende Verfahren hergestellte magnetführende Teile, wie Zylinder, Zylindersegmente, etc. aus dem oben genannten Basismaterial auf.

Darüber hinaus ist die Herstellung von dünneren oder dickeren Schicht bzw. Folien möglich, die mit üblichen Verfahren, beispielsweise massiven Endscheiben zu einem Paket gestapelt und durch axial verlaufende Bolzen kompaktiert werden. Damit werden magnetfeldführende Statoren und/oder Rotoren erhalten, die sich außer zur Magnetfeldführung auch zum Betrieb in chemisch aggressiver Umgebung eignen, da keine Spaltkorrosion einsetzen kann.

Die einzelnen Partikel mit ihren Umhüllungen können zusammengeklebt werden. Die hergestellten Schichten bzw. Folien können auch schichtweise auch verklebt werden, um einen Stator und/oder Rotor zu erhalten. Dies gelingt beispielsweise durch ein an sich bekanntes hot-sealing-Verfahren.

Die Erfindung sowie vorteilhafte Ausgestaltungen der Erfindung werden anhand eines Ausführungsbeispiels näher erläutert; darin zeigen:
- FIG 1: einen Längsschnitt einer dynamoelektrischen Maschine,
- FIG 2: einen Ausschnitt aus einem Basismaterial,
- FIG 3: einen weichmagnetischen Partikel
- FIG 4: ein Teilquerschnitt von Stator- und Rotorpaket.

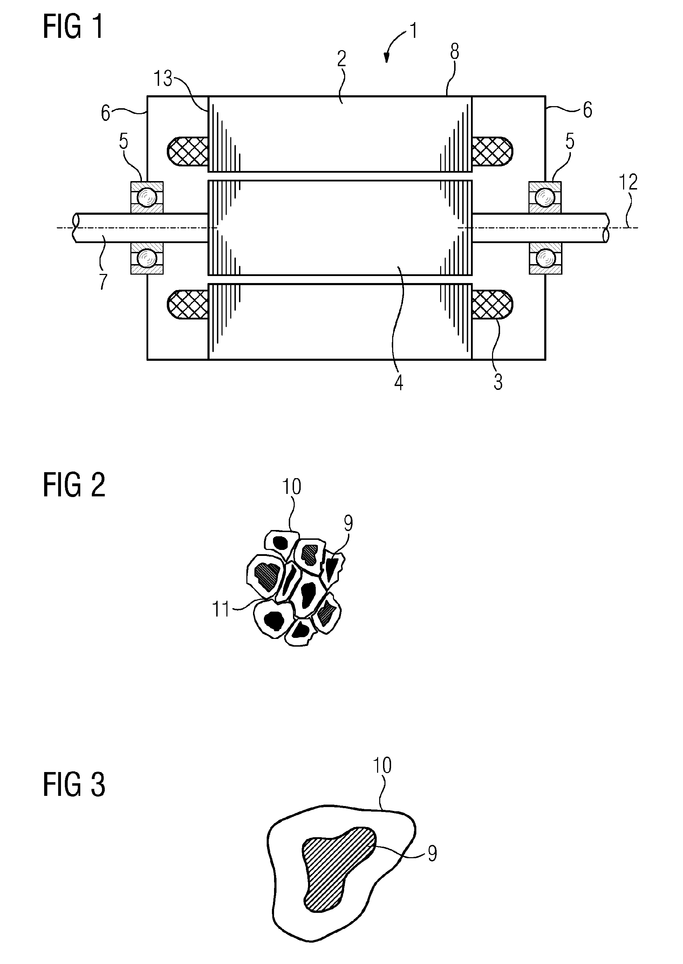

FIG 1 zeigt eine prinzipielle dynamoelektrische Maschine 1, in Radialflussanordnung, die ein Blechpaket eines Stators 2 und ein Blechpaket eines Rotors 4 aufweist. Auf eine Welle 7 ist der Rotor 4 aufgeschrumpft. Im Betrieb der dynamoelektrischen Maschine 1 - also bei elektromagnetischer Wechselwirkung von Stator 2 mit dem Rotor 4 dreht sich die Welle 7 um die Achse 12. Die Welle 7 ist in Lagern 5 gelagert und in einem Gehäuse 6 gehalten. Stator 2 und Rotor 4 sind aufgrund von Verringerungen der Wirbelstromverluste durch geschichtete Blechpakete aufgebaut. Jedoch müssen diese geschichteten Blechpakete bei extremen Umgebungsbedingungen, wie z.B. bei Erdgasförderung, korrosionsgeschützt werden, um eine Spaltkorrosion des geschichteten Blechpaketes zu vermeiden. Dies gelingt in der Regel lediglich unzureichend, da Stöße oder Vibrationen zu Rissen und Spalten am Korrosionsschutz der Blechpakete führen, die den Korrosionsschutz an den geschichteten Blechpaketen verringern.

Statoren 2 weisen neben den magnetfeldführenden Komponenten auch Wicklungssysteme 3 auf, die im Stator 2 magnetfeldbildend sind. Diese Wicklungen sind in Nuten gebettet und werden getränkt und/oder mit Isoliermaterialien versehen.

Die Rotoren 4 sind beispielsweise als Käfigläufer, als permanentmagneterregter Läufer, als Läufer mit Wicklungssystem oder Reluktanzläufer ausgebildet.

Erfindungsgemäß wird nunmehr ein Kompositmaterial als Basismaterial 11 für Stator und/oder Rotor zur Magnetfeldführung vorgesehen, das weichmagnetische Füllstoffe 9, also magnetisch leitende Partikel gemäß FIG 2 aufweist, wobei jeder Partikel eine Umhüllung 10 aufweist, bzw. umhüllt ist.

Das Basismaterial 11 wird grundsätzlich auf zweierlei Arten bereitgestellt. Bei dem ersten Verfahren wird in Kunststoffmaterial weichmagnetische Partikel gegeben. Bei dem zweiten Verfahren werden die einzelnen Partikel zunächst jeweils einzeln von einer Kunststoffschicht umgeben.

Daran schließen sich jeweils weitere Verfahrensschritte an, wie spritzgießen oder sintern um das Basismaterial 11 zu erhalten.

Somit wird das Magnetfeld in Stator 2 und Rotor 4 weiterhin, jetzt aber durch das Basismaterial 11 geführt und eine Verletzung der Umhüllung 10 der Partikel durch Stöße Vibrationen etc. führt lediglich lokal zu einer Korrosion einzelner Partikel, was aber die Führung des Magnetfeldes nur vernachlässigbar beeinträchtigt. Diese lokale Korrosion weitet sich aber aufgrund des erfindungsgemäßen Aufbaus von Stator 2 und/oder Rotor 4 nicht auf das jeweilige gesamte Blech aus, wie bei einem konventionellen Aufbau, sondern beschränkt sich lokal auf die jeweiligen Partikel, deren Umhüllung 10 verletzt wurde. Eine korrosive Wirkung an dem Partikel stellt sich aber nur dann ein, wenn die aggressiven Medien bis zu dem Partikel vordringen können. Die Mindestanforderung dabei ist, dass der Spalt von der Oberfläche der Umhüllung 10 bis zum Partikel reicht, damit die aggressiven Medien bis zum Partikel vordringen.

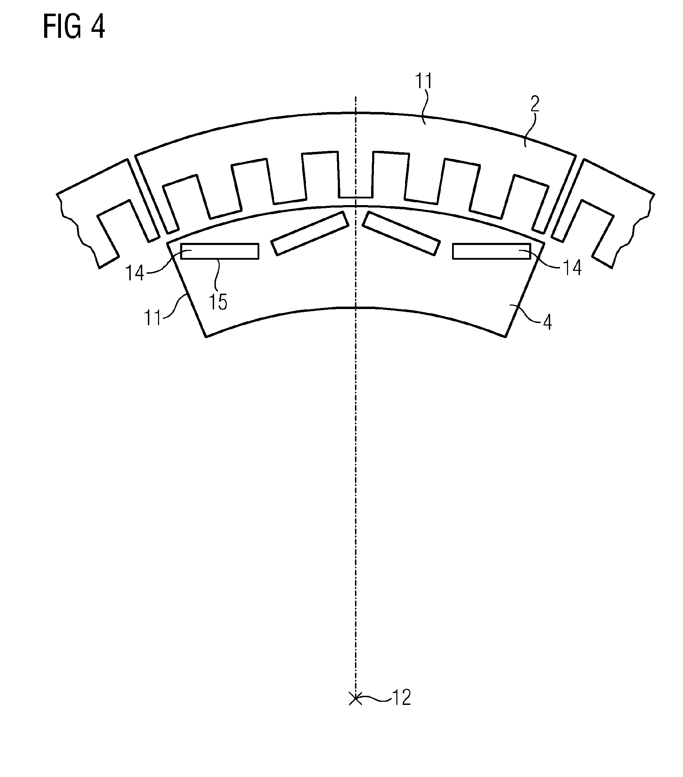

Die Statoren 2 und/oder Rotoren 4 sind dabei schichtweise, wie ein klassisches Blechpaket gestapelt. Stator 2 und/oder Rotor 4 können aber ebenso jeweils einteilig ausgebildet sein. Ebenso ist es möglich, die vor allem bei im Durchmesser größeren dynamoelektrischen Maschinen 1 in Umfangsrichtung segmentiert aufzubauen, wie dies beispielsweise der FIG 4 zu entnehmen ist. Dabei ist aus zeichnerischen Gründen der Stator 2 ohne Wicklungssystem gezeigt und als Segment ausgebildet. Der Rotor 4 kann dabei ebenfalls segmentiert ausgebildet sein und Ausnehmungen 15 aufweisen, in die beispielsweise Permanentmagneten 14 einsetzbar sind. Er kann auf einer Vollwelle 7 oder Hohlwelle positioniert sein. Das Basismaterial 11 bildet bei Stator 2 und/oder Rotor 4 die magnetfeldführende Komponente.

Als Kunststoffmaterial für die Umhüllung 10 bzw. Kapselung sind dabei vorzugsweise PEEK-Materialen aus der Familie der Polyetherketone vorzusehen. Dieses Polymer, vorzugsweise als Pulver wird dabei mit den Partikeln gesintert.

Polyetherketone sind Polymere, die in ihrem molekularen Aufbau abwechselnd Keton- und Etherfunktionalitäten aufweisen. Am gebräuchlichsten sind dabei Polyaryletherketone (PAEK), bei denen sich zwischen den funktionellen Gruppen jeweils eine in (1,4)-Position verknüpfte Agrylgruppe befindet. Das damit erhaltene sehr starre Gerüst verleiht den Materialien im Vergleich zu anderen Kunststoffen sehr hohe Glasübergangs- und Schmelztemperaturen. Das dabei vergleichsweise häufig eingesetzte Material dieser hochtemperaturfesten Werkstoffe ist das PEEK.

Weitere Vertreter der Polyetherketone, die ebenfalls als Kunststoffmaterial geeignet sind, gibt es
PEKK = Poly(etherketonketon);
PEEEK = Poly(etheretheretherketon);
PEEKK = Poly(etheretherketonketon) und
PEKEKK = Poly(etherketon-etherketonketon).

Als magnetische Füllstoffe 9 eignen sich vor allem Ferrite und Eisenpulver, dabei ist ein Volumenprozentanteil der weichmagnetischen Füllmaterialen von > 80 Vol.% bei 50-60 Massen% -Anteil anzustreben. Die Partikelgröße der weichmagnetischen Füllmaterialen ist dabei von 0,5 bis 5mm vorzugsweise bei 2-3 mm, um mit den gängigen Verfahren weiter verarbeitet werden zu können.

Innerhalb des Basismaterials 11 sind unabhängig vom Herstellverfahren folgende Verteilungen grundsätzlich möglich. Vorzugsweise liegt eine homogene Verteilung vor. Zum einen eine homogene Verteilung eines weichmagnetischen Füllstoffs 9 mit nahezu gleicher Partikelgröße. Eine homogene Verteilung eines weichmagnetischen Füllstoffs mit unterschiedlicher Partikelgröße. Eine homogene Verteilung zwei oder mehrerer unterschiedlicher weichmagnetischer Füllstoffe 9 mit nahezu gleicher Partikelgröße. Eine homogene Verteilung zwei oder mehrerer weichmagnetischer Füllstoffe 9 unterschiedlicher Partikelgröße, so dass kleinere Partikel in den Zwischenräumen zwischen den größeren Partikeln angeordnet sind. Damit lassen sich in einfacher Art und Weise die angestrebten Anteile von > 80 Vol.% bei 50-60 Massen% erreichen.

Ebenso ist es möglich die Partikel vor der Herstellung des Basismaterials in Form und Material - wie oben beschrieben - zu gestalten, um somit u.a die Packungsdichte der umhüllten Partikel zu erhöhen. Dabei sind runde Partikel unterschiedlicher Radien oder Vielecke möglich. Ebenso sind grundsätzlich hohle Partikel möglich.

Des Weiteren sind mit diesen Partikelgrößen und/oder weichmagnetischen Füllstoffen 9 auch inhomogene Verteilungen innerhalb des Basismaterials 11 möglich und/oder durch die Verfahren einstellbar. Damit sind Verteilungen innerhalb des Basismaterials 11 möglich, die die weichmagnetischen Füllstoffe 9 vor allem an den Stellen des Stators 2 und/oder Rotors 4 platzieren, die von dem Magnetfluss durchsetzt sind und wo eine vergleichsweise gute magnetische Leitfähigkeit angestrebt wird.

FIG 3 zeigt einen metallischen Partikel, bzw. Füllstoff 9 mit seiner Umhüllung 10. Wobei die Schichtdicke der Umhüllungen 10 eines Partikels im Mikrometerbereich (µm) bei ca. 5 bis 300 µm liegen.

Die Erfindung wird vorteilhafterweise bei dynamoelektrischen Maschinen 1 in chemisch aggressiver Umgebung eingesetzt, um die Korrosion der magnetfeldführenden Komponenten zu vermindern. Neben den Elektromotoren werden unter dynamoelektrischen Maschinen 1 auch Generatoren und Magnetlager verstanden. Der erfinderische Aufbau von Stator 2 und/oder Rotor 4 ist auch bei den unterschiedlichsten Ausführungsformen der dynamoelektrischen Maschinen, wie Motoren mit Scheibenläufer, Linearmotoren, Transversalflussmaschinen etc. einsetzbar.

Derartige Statoren 2 und/oder Rotoren 4 sind deshalb bei Antrieben von Erdgaskompressoren und/oder bei Magnetlagern, aufgrund ihrer Beständigkeit gegenüber aggressiven Medien vorgesehen.

Die oben ausgeführten physikalischen und technischen Zusammenhänge sind auch auf andere elektrische Maschinen wie Transformatoren anwendbar. Auch dort ist es möglich die magnetfeldführenden Komponenten erfindungsgemäß mit derartigem Basismaterial 11 zu versehen, um in aggressiver Umgebung aufgestellt und betrieben werden zu können.

## Patentansprüche

1. Stator (2) und/oder Rotor (4) einer dynamoelektrischen Maschine (1), die jeweils weichmagnetisches Material zur Führung eines Magnetfeldes aufweisen, wobei Stator (2) und/oder Rotor (4) ein Basismaterial (11) aufweisen, das ein Kompositmaterial aus chemikalienbeständigem Kunststoff mit weichmagnetischen Füllstoffe (9) enthält.

2. Stator (2) und/oder Rotor (4) einer dynamoelektrischen Maschine (1), die jeweils weichmagnetisches Material zur Führung des Magnetfeldes aufweisen, wobei Stator (2) und/oder Rotor (4) ein Basismaterial (11), mit weichmagnetischen Füllstoffe (9) aufweisen, die jeweils durch ein Polymer umhüllt sind.

3. Stator (2) und/oder Rotor (4) einer dynamoelektrischen Maschine (1) nach Anspruch 1 oder 2, **dadurch ge- kennzeichnet,** dass das Basismaterial (11) in axialer Richtung schichtweise gestapelt ist.

4. Stator (2) und/oder Rotor (4) einer dynamoelektrischen Maschine (1), nach Anspruch 3, **dadurch gekenn- zeichnet,** dass das Basismaterial (11) Schichten oder Folien bildet, die durch massive Endscheiben und/oder Bolzen paketierbar sind.

5. Stator (2) und/oder Rotor (4) einer dynamoelektrischen Maschine (1), nach einem der vorhergehenden Ansprüche, **da**- **durch gekennzeichnet**, dass die Umhüllung (10) der weichmagnetischen Füllstoffe (9) eine vorgebbare Schichtdicke aufweist.

6. Stator (2) und/oder Rotor (4) einer dynamoelektrischen Maschine (1), nach einem der vorhergehenden Ansprüche, **da**- **durch gekennzeichnet,** dass das schichtweise zusammengesetzte Basismaterial (11) miteinander, insbesondere durch ein Hot-Sealing-Verfahren, verklebt ist.

7. Stator (2) und/oder Rotor (4) einer dynamoelektrischen Maschine (1), nach einem der vorhergehenden Ansprüche, **da**- **durch gekennzeichnet**, dass die weichmagnetischen Füllstoffe (9) Oxide, Sulfide oder Sulfate sind.

8. Erdgaskompressor mit einer dynamoelektrischen Maschine (1), die einen Stator (2) und/oder Rotor (4) nach einem der vorhergehenden Ansprüche 1 bis 7 aufweisen.

9. Magnetlager mit einem Stator (2) und/oder einem Rotor (4) nach einem der Ansprüche 1 bis 7.

10. Verfahren zur Herstellung eines Stators und/oder eines Rotors einer dynamoelektrischen Maschine (1) durch folgende Schritte:
- Dotierung eines chemikalienbeständigen Kunststoffs mit weichmagnetischen Füllstoffen (9) um ein Basismaterial (11) zu erhalten ,
- Formen des Basismaterials (11) mittels eines Extrusions- oder Spitzgießverfahrens,

11. Verfahren zur Herstellung eines Stators und/oder eines Rotors einer dynamoelektrischen Maschine (1) durch folgende Schritte:
- Umhüllen von weichmagnetischen Füllstoffen (9) mit einem Polymer, mit anschließendem Verkleben der umhüllten Füllstoffe um ein Basismaterial (11) zu erhalten,
- Formen des Basismaterials (11).

12. Verfahren nach Anspruch 10 oder 11, **dadurch gekennzeichnet, dass** mit dem Basismaterial (11) je nach angestrebter Anwendung, insbesondere für eine dynamoelektrischen Maschine (1) dementsprechende geometrische Elemente bzw. Subelemente geformt werden, wie z.B. Zylinder, Zylindersegmente, Hohlzylinder, Scheiben, Folien, die zu einem Stator (2) und/oder Rotor (4) zusammengesetzt werden.

13. Verfahren nach Anspruch 12, **dadurch ge- kennzeichn**e**t,** dass die zu einem Stator (2) und/oder Rotor (4) zusammengesetzten geometrischen Elemente durch massive Endscheiben und/oder Bolzen Kompaktiert werden.
